# EUROPEAN PATENT APPLICATION

(11) **EP 4 040 312 A1**
(43) Date of publication of application: **10.08.2022**
(21) Application number: 21156128.7
(22) Date of filing: 09.02.2021
(51) Int. Cl.: G06F 16/906

(54) **METHOD, DATA PROCESSING DEVICE, COMPUTER PROGRAM PRODUCT AND DATA CARRIER SIGNAL**

(71) Applicant: Volkswagen Aktiengesellschaft, 38440 Wolfsburg (DE)
(72) Inventor: Asgari, Ehsaneddin, 85748 Garching bei München (DE); Ringlstetter, Christoph, 81543 München (DE)

(57) **Abstract**

The invention relates to a method for providing a balanced training dataset for training a Machine Learning model, a data processing device, a computer program product, a data carrier signal, and a method for selecting representatives of data records within a dataset.

A method for providing a balanced training dataset (20) for training a Machine Learning model (30), comprising: receiving a multi-class dataset (10) containing data records (11) of at least one majority class (12) and at least one minority class (13), representing the data records (11) of the at least one majority class (12) by using at least one content-based representation of the data records (11), k-means clustering of the data records (11) of the at least one majority class (12) based on the at least one content-based representation, wherein the number k of clusters is set in consideration of a number and/or size of the at least one minority class (13), selecting the data record (11s) closest to the centroid of each cluster as representative of the respective cluster, aggregating the selected data records (11s) of the at least one majority class (12) and the data records (11) of the at least one minority class (13), providing the aggregated data records (11, 11 s) as training dataset (20).

## Description

The invention relates to a method for providing a balanced training dataset for training a Machine Learning model, a data processing device, a computer program product, a data carrier signal, and a method for selecting representatives of data records within a dataset.

In many Machine Learning problems of supervised classification, the distribution of data points or data records across known categories or classes is biased/skewed. Imbalanced data is a big challenge for most Machine Learning classification methods, which work well mainly in balanced cases. Down-sampling of the major class(es) and over-sampling of the minor class(es) during training are among the known solutions to this problem.

WO 2020/201835 A1 describes a system and a method for machine learning training which provide a master AI subsystem for training a machine learning processing pipeline, the machine learning processing pipeline including machine learning components to process an input document, where each of at least two of the candidate machine learning components is provided with at least two candidate implementations, and the master AI subsystem is to train the machine learning processing pipeline by selectively deploying the at least two candidate implementations for each of the at least two of the machine learning components.

US 2020/0026636 A1 describes a method for classifying warning messages generated by software developer tools. The method includes receiving a first data set. The first data set includes a first plurality of data entries, where each data entry is associated with a warning message generated based on a first set of software codes, includes indications for a plurality of features, and is associated with one of a plurality of class labels. A second data set is generated by sampling the first data set. Based on the second data set, at least one feature is selected from the plurality of features. A third data set is generated by filtering the second data set with the selected at least one feature. A machine learning classifier is determined based on the third data set. The machine learning classifier is used to classify a second warning message generated based on a second set of software codes to one of the plurality of class labels.

The invention is based on the technical problem of developing a method and a device for providing a balanced training dataset for training a Machine Learning model, wherein the provided training dataset particularly still covers the full breadth and diversity of information within the dataset.

According to the invention, the technical problem is solved by a method having the features of claim 1, a device having the features of claim 13, a computer program product having the features of claim 14, and a data carrier signal having the features of claim 15. Advantageous embodiments of the invention emerge from the dependent claims.

In particular a method is proposed for providing a balanced training dataset for training a Machine Learning model, comprising receiving a multi-class dataset containing data records of at least one majority class and at least one minority class, representing the data records of the at least one majority class by using at least one content-based representation of the data records, k-means clustering of the data records of the at least one majority class based on the at least one content-based representation, wherein the number k of clusters is set in consideration of a number and/or size of the at least one minority class, selecting the data record closest to the centroid of each cluster as representative of the respective cluster, aggregating the selected data records of the at least one majority class and the data records of the at least one minority class, and providing the aggregated data records as training dataset.

Further, a data processing device is provided, comprising at least one processor configured to perform the method. The data processing device in particular comprises at least one processor, a non-volatile memory to store program code, and at least one working memory. Further, the data processing device may comprise an input/output interface to communicate with other devices and receive and/or send data.

The method is in particular executed as computer implemented method.

In addition, a computer program product comprising instructions which, when the program is executed by a computer or data processing device, cause the computer or the data processing device to carry out the method, and a data carrier signal carrying a computer program or a computer program product are provided.

The method and the device allow to down-sample the number of data records within the at least one majority class. This down-sampling is performed in such a way that the data records which are to be included into the training dataset are representative of the data records within the at least one majority class of the dataset. To achieve this, a content-based representation of the data records is used to represent the data records of the at least one majority class. The content-based representation in particular maps the content of a data record to a vector. This way the content of the data records can be compared with each other. In particular, the content-based representation can be selected and/or performed irrespective of the features of the data records which are to be used as input for the Machine Learning model to be trained. The data records of the at least one majority class are clustered using k-means clustering based on the at least one content-based representation. The number k of clusters is set in consideration of a number and/or size of the at least one minority class. The number k of clusters is in particular set in such a way that the resulting number of majority class clusters is balanced with the number of data records of the at least one minority class. The data records which are closest to a centroid of a cluster are selected as representative of the respective cluster. For each majority class cluster this results in one representative. The selected data records of the at least one majority class and the data records of the at least one minority class are aggregated into one dataset. The dataset is provided as a training data set for training at least one Machine Learning model.

In particular, the method provides a balanced training scheme of a Machine Learning model on an originally imbalanced dataset.

The method and the device have the advantage that down-sampling of the majority class is not performed randomly, but with respect to a representative quality of the data records selected. This way the training dataset can be balanced while still representing the full breadth and diversity of information present in all of the data records in the at least one majority class.

A Machine Learning model is in particular a Neural Network, for example a Deep Neural Network. In principle, other types of Machine Learning models can be used, such as support vector machines, Bayesian Networks and alike. Training the Machine Learning model is in particular carried out using supervised training, i.e. the ground truth is known for the multi-class dataset and the training dataset derived therefrom.

In one embodiment, the number k of clusters is defined as k = (1+δ) x |minor class(es)|. (1+δ) indicates the ratio between the size of the at least one majority class sample and the number of instances in the at least one minority class, and |minor class(es)| is the number of instances in the at least one minority class. The optimal δ can be different for different Machine Learning models and datasets and has to be tuned based on a validation dataset. For example, if the majority class has 100,000 examples and the minority class has 1,000 examples, with δ = 0.2 1,200 examples from the majority class are used and the 1,000 examples of the minority class.

In one embodiment, provision is made for at least one Machine Learning model to be trained using the training dataset. Using the balanced training dataset the at least one Machine learning model sees the full breadth and diversity of information present in the at least one majority class and the at least one minority class. This way, a functional quality of the trained Machine Learning model, e.g. a success rate for classification and/or segmentation etc., can be improved, in particular for data records drawn from the data domain of the at least one minority class.

In one embodiment, for each epoch of the training of the at least one Machine Learning model a new training dataset is provided using different random seeds for the k-means clustering of the data records. This ensures that the training of the Machine Learning model is performed with a diverse set of representatives of the at least one majority class. As a result, the training of the at least one Machine Learning model can be enhanced and the functional quality of the trained Machine Learning model can be improved further.

In one embodiment, a minimum number of iterations for the k-means clustering is set. This allows the k-means clustering to converge up to a predetermined point. As a result, a set of representatives of the at least one majority class can be provided that represents the full breadth and diversity of information within the at least one majority class.

In one embodiment, the at least one Machine Learning model comprises an ensemble classifier, wherein a different training dataset is provided for each instance of the ensemble classifier using different random seeds for the k-means clustering of the data records. This allows the training datasets to fully represent the breadth and diversity of information within the at least one majority class such that each classifier of the ensemble classifier can be trained using the full breadth and diversity of the available information. As a result, the functional quality, e.g. the success rate for classification and/or segmentation etc., of the ensemble classifiers can be improved further.

In one embodiment, the at least one trained Machine Learning model is loaded into the memory of at least one control device or processing device for application. The control device or processing device can be, for example, a control or processing device within an enterprise document processing system. The control device or processing device can also be, for example, a control device or processing device within a production system, for example for analyzing measured data, in particular during quality inspection procedures.

In one embodiment, the data records within the multi-class dataset are text documents, wherein tf-idf is used as content-based representation of the data records. The measure tf-idf (term frequency-inverse document frequency) is a numerical statistic that reflects how important a word is to a document in a collection of documents. In particular, the terms used with the tf-idf measure are chosen based on the body of all words found within the documents, i.e. the terms come from the collection of text documents to be used as training data. A Machine Learning model trained with a training dataset provided by this embodiment of the method may be trained, for example, to classify text documents into different categories.

In a developing embodiment, tf-idf of n-grams of the text documents is used as content-based representation of the data records. An n-gram is in particular a contiguous sequence of n items from a given sample of text. This allows to use a lower level of information for the representation of the documents.

In one embodiment, the data records within the multi-class dataset are of at least one of the following type: image data, video data and/or audio data. Also, multimedia data records can be used. The content-based representation for the data records can, for example, be based on statistics of the image/video/audio data properties.

In one embodiment, the data records are of image data type, wherein the content-based representation is using at least one of the following: a color distribution of the images, high-level objects in the images, Speeded-Up Robust Features (SURF) and/or scale-invariant feature transform (SIFT). The high-level objects can be identified and/or classified using Machine Learning and/or Computer Vision methods.

Further, also a method is proposed for selecting representatives of data records within a multi-class dataset, comprising receiving a multi-class dataset containing data records, representing the data records by using at least one content-based representation of the data records, k-means clustering of the data records based on the at least one content-based representation, selecting the data records closest to the centroids of each cluster as representative of the respective cluster, providing the selected data records as representatives of the dataset. Besides text classification applications, this method can be used in any process that requires selection of meaningful representatives for a set of documents or data records. An example is data annotation. Another example is document screening: where brute force monitoring is not feasible, a subset of documents should be selected for screening. Particular embodiments, where applicable, are the same as for the other method described in this disclosure.

The invention is explained in greater detail below on the basis of preferred exemplary embodiments with reference to the drawings. In the drawings:
- Fig. 1: shows a schematic diagram of an embodiment of the data processing device used for performing the method;
- Fig. 2: shows a schematic diagram to illustrate the function of the method;
- Fig. 3: shows a schematic flow diagram of an embodiment of the method for providing a balanced training dataset for training a Machine Learning model.

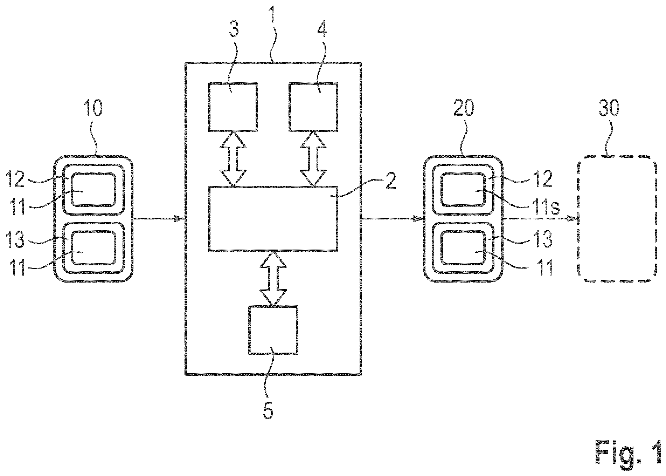

Fig. 1 shows a schematic diagram of an embodiment of the data processing device 1 used for performing the method. The data processing device 1 comprises a processor 2, for example a microprocessor, a working memory 3, a non-volatile memory 4, and an input/output interface 5. The non-volatile memory 4 holds a program comprising instructions which, when the program is executed by the processor 2, cause the processing device 1 to carry out the method. The program is loaded into the working memory 3 of the processing device 1 and the instructions are executed on the processor 2. The processing device 1 is in particular configured to perform the method for providing a balanced training dataset 20 for training a Machine Learning model 30.

The processor 2 receives a multi-class dataset 10 containing data records 11 of at least one majority class 12 and at least one minority class 13 via the input/output interface 5.

The processor 2 represents the data records 11 of the at least one majority class 12 by using at least one content-based representation of the data records 11.

The processor 2 clusters the data records 11 of the at least one majority class 12 based on the at least one content-based representation using k-means clustering, wherein the number k of clusters is set in consideration of a number and/or size of the at least one minority class 13.

The processor 2 selects the data record 11s closest to the centroid of each cluster as representative of the respective cluster, and aggregates the selected data records 11s of the at least one majority class 12 and the data records 11 of the at least one minority class 13.

The aggregated data records 11, 11s are provided as training dataset 20. The aggregated data records 11, 11s are in particular output using the input/output interface 5.

The training dataset 20 can be used to train a Machine Learning model 30.

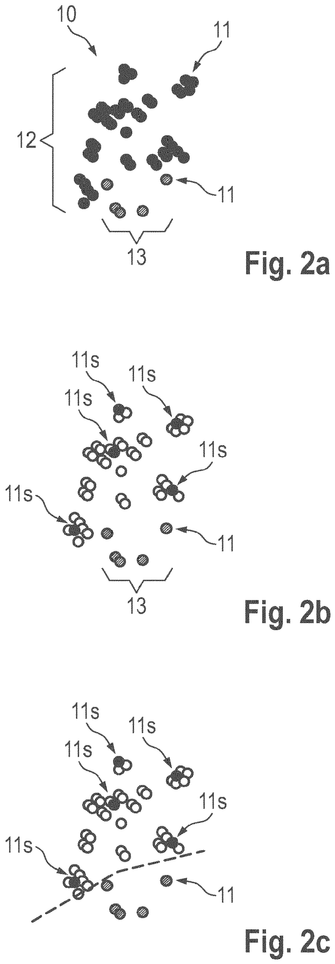

Fig. 2 shows a schematic diagram to illustrate the function of the method. Fig. 2 (a) shows a multi-class dataset 10 consisting of data records 11 (for clarity, not all of them are marked with a reference numeral) which belong either to a majority class 12 or to a minority class 13. Using the method for providing a balanced training dataset for training a Machine Learning model as described in various embodiments of this disclosure, the data records 11 of the majority class 12 are represented by using at least one content-based representation of the data records 11. With regard to text documents, for example, the tf-idf measure can be used. The data records 11 of the majority class 12 are clustered based on the at least one content-based representation, for example the tf-idf measure, using k-means clustering. The number k of clusters is set in consideration of a size of the minority class 13, in the simple example shown k equals 5, since the minority class 13 comprises five data records 11. The data record 11s closest to the centroid of each cluster is selected as representative of the respective cluster (Fig. 2(b)). The selected data records 11s of the majority class 12 and the data records 11 of the minority class 13 are aggregated to form a training data set (Fig. 2(c)). The other data records 11 within the majority class 12 are discarded; however, they can be used for providing different training datasets when the clustering is repeated with different random seeds to start with. The training dataset is provided and can be used to train at least one Machine Learning model.

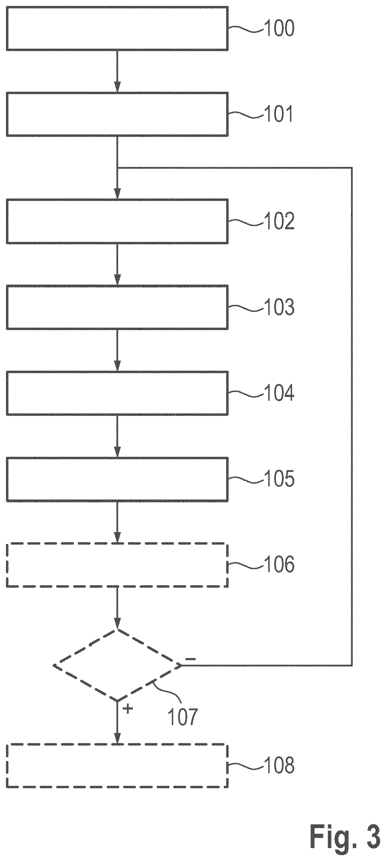

Fig. 3 shows a schematic flow diagram of an embodiment of the method for providing a balanced training dataset for training a Machine Learning model.

In measure 100 a multi-class dataset containing data records of at least one majority class and at least one minority class is received. In particular, the data records within the multi-class dataset are text documents.

It is also possible that before measure 100 is performed the dataset is classified into the at least one majority class and the at least one minority class in order to identify the at least one majority class and the at least one minority class. This can be achieved, for example, based on counts of samples or data records within the different classes.

In measure 101 the data records of the at least one majority class are represented by using at least one content-based representation of the data records. In particular, the content-based representation of the data record uses the tf-idf measure for representing the text documents.

In measure 102 the data records of the at least one majority class are clustered based on the at least one content-based representation, in particular the tf-idf measure, using k-means clustering. The number k of clusters is set in consideration of a number and/or size of the at least one minority class. In particular, the number k of clusters is defined as k = (1+δ) x |minor class(es)|, where δ is a factor to adjust the balancing between the at least one majority class and the at least one minority class. In particular, (1+δ) indicates the ratio between the size of the at least one majority class sample and the number of instances in the at least one minority class. |minor class(es)| is the number of instances in the at least one minority class. At the start of the clustering the center values of the k clusters are set using random seeds.

It is possible to use tf-idf of n-grams of the text documents as content-based representation of the data records.

It is possible to set a minimum number of iterations for the k-means clustering. This way, a sufficient convergence can be reached.

In measure 103 the data record closest to the centroid of each cluster is selected as representative of the respective cluster.

In measure 104 the selected data records of the at least one majority class and the data records of the at least one minority class are aggregated to form a training data set.

In measure 105 the training data set is provided; for example, it can be output using an output interface.

In one particular embodiment, at least one Machine Learning model is trained in measure 106 using the provided training dataset.

Measures 102 to 106 can be repeated to generate new training datasets. In measure 102 different random seeds are then used for the start values of the k clusters.

Measures 102 to 106 are repeated until the trained at least one Machine Learning model reaches a sufficient functional quality. In particular, a new training dataset is provided using different random seeds for the k-means clustering of the data records for each epoch of the training of the at least one Machine Learning model. The functional quality can be tested in a measure 107.

If the at least one Machine Learning model comprises an ensemble classifier, a different training dataset can be provided for each instance of the ensemble classifier using different random seeds for the k-means clustering of the data records. In order to achieve this, measures 102 to 106 are repeated for each of the classifiers within the ensemble separately.

If sufficient functional quality is reached at the end of the training, the trained at least one Machine Learning model can be loaded into the memory of at least one control device or processing device for application (measure 108).

Instead of text documents the method can be used with data records that are of at least one of the following type: image data, video data and/or audio data. Also multimedia data can be used. In any case an appropriate content-based representation has to be used which is adapted to the specific type of data.

In particular, if the data records are of image data type, the content-based representation can be using at least one of the following: a color distribution of the images, high-level objects in the images, Speeded-Up Robust Features (SURF) and/or scale-invariant feature transform (SIFT).

### Reference numerals

- 1: data processing device
- 2: processor
- 3: working memory
- 4: non-volatile memory
- 5: input/output interface
- 10: multi-class dataset
- 11: data records
- 11s: selected data records
- 12: majority class
- 13: minority class
- 20: training dataset
- 30: Machine Learning model
- 100-108: method measures

## Claims

1. Method for providing a balanced training dataset (20) for training a Machine Learning model (30), comprising:
receiving a multi-class dataset (10) containing data records (11) of at least one majority class (12) and at least one minority class (13),
representing the data records (11) of the at least one majority class (12) by using at least one content-based representation of the data records (11),
k-means clustering of the data records (11) of the at least one majority class (12) based on the at least one content-based representation, wherein the number k of clusters is set in consideration of a number and/or size of the at least one minority class (13),
selecting the data record (11s) closest to the centroid of each cluster as representative of the respective cluster,
aggregating the selected data records (11s) of the at least one majority class (12) and the data records (11) of the at least one minority class (13),
providing the aggregated data records (11, 11s) as training dataset (20).

2. Method according to claim 1, **characterized in that** the number k of clusters is defined as k = (1+δ) x |minor class(es)|.

3. Method according to claim 1 or 2, **characterized in that** at least one Machine Learning model (30) is trained using the training dataset (20).

4. Method according to claim 3, **characterized in that** for each epoch of the training of the at least one Machine Learning model (30) a new training dataset (20) is provided using different random seeds for the k-means clustering of the data records (11).

5. Method according to one of the preceding claims, **characterized in that** a minimum number of iterations for the k-means clustering is set.

6. Method according to one of the preceding claims, **characterized in that** the at least one Machine Learning model (30) comprises an ensemble classifier, wherein a different training dataset (20) is provided for each instance of the ensemble classifier using different random seeds for the k-means clustering of the data records (11).

7. Method according to one of the preceding claims, **characterized in that** the at least one trained Machine Learning model (30) is loaded into the memory of at least one control device or processing device for application.

8. Method according to one of the preceding claims, **characterized in that**, the data records (11) within the multi-class dataset (10) are text documents, and wherein tf-idf is used as content-based representation of the data records (11).

9. Method according to claim 8, **characterized in that** tf-idf of n-grams of the text documents is used as content-based representation of the data records (11).

10. Method according to one of the claims 1 to 7, **characterized in that** the data records (11) within the multi-class dataset (10) are of at least one of the following type: image data, video data and/or audio data.

11. Method according to one of the preceding claims, **characterized in that** the data records (11) are of image data type, wherein the content-based representation is using at least one of the following: a color distribution of the images, high-level objects in the images, Speeded-Up Robust Features (SURF) and/or scale-invariant feature transform (SIFT).

12. Method for selecting representatives of data records (11) within a multi-class dataset (10), comprising:
receiving a multi-class dataset (10) containing data records (11),
representing the data records (11) by using at least one content-based representation of the data records (11),
k-means clustering of the data records (11) based on the at least one content-based representation,
selecting the data records (11s) closest to the centroids of each cluster as representative of the respective cluster,
providing the selected data records (11s) as representatives of the dataset (10).

13. A data processing device (1) comprising at least one processor (2) configured to perform the method of one of the claims 1 to 11 or claim 12.

14. Computer program product comprising instructions which, when the program is executed by a computer or data processing device (1), cause the computer or the data processing device (1) to carry out the method of one of the claims 1 to 11 or claim 12.

15. A data carrier signal carrying the computer program product of claim 14.
